# EUROPÄISCHE PATENTSCHRIFT

(11) **EP 2 007 625 B1**
(45) Veröffentlichungstag und Bekanntmachung des Hinweises auf die Patenterteilung: **23.12.2009**
(21) Anmeldenummer: 08715792.1
(22) Anmeldetag: 15.02.2008
(51) Int. Cl.: B64D 11/06, B63C 9/30

(54) **SITZ, INSBESONDERE FLUGGASTSITZ**
SEAT, ESPECIALLY A SEAT FOR AN AIR PASSENGER
SIÈGE, NOTAMMENT SIÈGE D'AVION

(30) Priorität: 16.02.2007 DE 102007007856
(43) Veröffentlichungstag der Anmeldung: 31.12.2008
(73) Patentinhaber: Metzeler Schaum GmbH, 87700 Memmingen (DE)
(72) Erfinder: HEITMANN, Ulrich, 87700 Memmingen (DE); BUHRIG, Sabine, 87740 Buxheim (DE); KOELMAN, Frank, 87700 Memmingen (DE); HOHENHORST, Manfred, 88430 Rot An Der Rot (DE)
(74) Vertreter: Schober, Christoph D.
(86) Internationale Anmeldenummer: PCT/EP2008/001175
(87) Internationale Veröffentlichungsnummer: WO 2008/098779

(56) Entgegenhaltungen:
- EP-A- 0 472 761
- US-A- 3 369 262
- US-A- 3 903 554
- US-A- 4 039 363
- US-A- 5 335 882
- US-A1- 2002 185 905

## Beschreibung

Die vorliegende Erfindung betrifft einen Sitz, insbesondere einen Fluggastsitz, mit einem Rückenteil und einem Sitzteil, wobei wenigstens eines der Teile von dem Sitz abtrennbar und mit einem Auftriebselement versehen ist und wobei das Auftriebselement aus einem geschlossenzelligen Schaumstoff besteht.

Passagierflugzeuge müssen im Allgemeinen Rettungsvorrichtungen für Notsituationen bereithalten. Die Anforderungen an solche Rettungsvorrichtungen sind in internationale Standards, wie sie beispielsweise von der FAA oder der JAA veröffentlicht werden, festgelegt.

So ist es vorgeschrieben, dass Passagierflugzeuge für den Fall einer Notwasserung Schwimmhilfen für die Passagiere bereitstellen müssen. Dies geschieht im Allgemeinen, insbesondere bei Flugzeugen, die Routen befliegen, welche über größere Strecken Wassers führen, durch die Bereitstellung von Schwimmwesten unter den einzelnen Passagiersitzen.

Für Flugzeuge, die Passagiere auf Routen befördern, welche größtenteils über Land führen, ist eine weitere Möglichkeit vorgesehen. So kann auf die Bereitstellung von Schwimmwesten verzichtet werden, wenn Teile der Passagiersitze, nämlich deren Sitzteil, abnehmbar und als Schwimmhilfe verwendbar sind.

Damit ist für den bei einer im Wesentlichen über Land führenden Flugroute unwahrscheinlichen Fall vorgesorgt, dass das Flugzeug notwassern muss. Bei der Notwasserung entfernen die Passagiere das abnehmbare Sitzteil ihres Sitzes und nehmen es beim Verlassen des Flugzeugs mit sich. Im Wasser wirkt diese Schwimmhilfe ähnlich eines Schwimmbretts, so dass der Passagier sich auf die Schwimmhilfe legen kann und von dieser getragen wird.

Herkömmlich bestehen derartige Schwimmhilfen aus einer äußeren, oft mehrlagigen Hülle und einem Kern.

Die Hülle ist aus Materialien gebildet, die die Möglichkeit einer ansprechenden optischen Gestaltung bieten. Weiter wird durch die Hülle eine Polsterungsfunktion bereitgestellt, die dem Fluggast ein komfortables Sitzen ermöglichen soll.

Der Kern besteht hingegen für gewöhnlich aus einem geschlossenzelligen Schaumstoff, der eine für die Funktion als Schwimmhilfe notwendige Auftriebskraft in Wasser sicherstellt. Derartige Kerne sind herkömmlich aus einem Hartschaumstoff gebildet, wodurch es allein der den Kern umgebenden Hülle überlassen ist, dem Benutzer des Sitzes ein komfortables Sitzen zu gewährleisten.

Auf Grund eines in den oben genannten internationalen Standards definierten Mindestauftriebs ist es nicht möglich, den Kern beliebig klein zu gestalten. Dadurch fällt die Hülle oft vergleichsweise dünn aus. Die bekannten Sitze mit Schwimmhilfe sind daher äußerst unkomfortabel.

Ein Sitzkissen, das als Schwimmweste verwendbar ist, wird in der US 5 335 882 A offenbart. Das Sitzkissen ist zweiteilig aufgebaut, wobei jeder der Teile einen Schaumstoffkern und eine Hülle aufweist. Das Sitzkissen weist diverse Einschnitte und Ausschnitte auf, mittels derer die Form des Sitzkissens an einen menschlichen Körper angepasst werden kann.

Ein schwimmfähiges Sitzkissen, das äußere Schichten und einen Kern aufweist, wird in der US 4 039 363 A beschrieben. Der Kern besteht aus einem offenzelligen Polyurethanschaum und kann zur Erhöhung der Tragfähigkeit des Sitzkissens im Wasser aufgepumpt werden.

Ein Sitzpolster für einen Fluggastsitz, das zwei verschiedene Abschnitte aufweist, die aus unterschiedlichen Schaumstoffen bestehen, wird in der EP 0 472 761 A1 beschrieben. Der erste Schaumstoffabschnitt besteht aus Polyimid, wohingegen der zweite Schaumstoffabschnitt aus einem flammwidrig ausgebildeten Polyurethanschaumstoff besteht.

Weiterhin offenbart die US 3 369 262 A ein Schwimmkissen, das in einem Luftfahrzeug Anwendung finden kann und zur Erzeugung eines Auftriebs aus einem geschlossenzelligen Polystyren-Schaumstoff besteht.

Darüber hinaus ist es aus der US 2002/0185905 A1 bekannt, ein Sitzkissen durch den Einbau von Schichten aus Polyethylen auftriebsfähig zu machen.

Die US 3 903 554 A offenbart einen Flugzeugsitz, der in der Sitzfläche einen Stauraum zur Lagerung einer Schwimmweste aufweist.

Vor diesem Hintergrund stellt sich die Aufgabe, einen Sitz zu schaffen, der eine Schwimmhilfe bereitstellt, die die internationalen Standards einhält und die dem Passagier ein angenehmeres Sitzen ermöglicht.

Zur Lösung dieser Aufgabe wird ein Sitz mit den Merkmalen des Anspruchs 1 vorgeschlagen. Bevorzugte Ausgestaltungen der Erfindung sind Gegenstand der Ansprüche 2 bis 17.

Der erfindungsgemäße Sitz hat den Vorteil, dass er eine standardkonforme Schwimmhilfe bereitstellt und gleichzeitig ein komfortables Sitzen ermöglicht.

Die für die Verwendung als Schwimmhilfe erforderliche Auftriebskraft des Auftriebselements wird durch die weitgehend geschlossenzellige Struktur des Weichschaumstoffs, aus dem das Auftriebselement besteht, erreicht. Der Weichschaumstoff verfügt darüber hinaus über eine vergleichsweise hohe Verformungsfähigkeit und trägt damit zu einem komfortablen Sitzen bei. Bei dem Weichschaumstoff handelt es sich vorzugsweise um einen Polyurethanweichschaumstoff, insbesondere um einen Polyesterpolyurethanweichschaumstoff. Ein geeigneter Weichschaumstoff ist unter der Handelsbezeichnung Novada erhältlich.

Der verwendete Schaumstoff hat bevorzugt eine nach DIN EN ISO 3386/1 zu ermittelnde Stauchhärte zwischen 2 kPa und 12 kPa, mehr bevorzugt zwischen 8 kPa und 10 kPa.

Weiter bevorzugt liegt das Raumgewicht des Schaumstoffs zwischen 20 kg/m³ und 60 kg/m³, mehr bevorzugt zwischen 27 kg/m³ und 38 kg/m³. Dadurch ist eine ausreichende Auftriebskraft des Auftriebselements sichergestellt.

Die Zugfestigkeit des Schaumstoffs, die nach DIN EN ISO 1798 ermittelt wird, liegt vorzugsweise zwischen 140 kPa und 240 kPa, mehr bevorzugt zwischen 180 kPa und 200 kPa.

Die ebenfalls nach der DIN EN ISO 1798 zu ermittelnde Bruchverformung des Schaumstoffs hat vorzugsweise einen Wert zwischen 100 % und 300 %, besonders vorzugsweise einen Wert zwischen 120 % und 145 %.

Um weiter eine ausreichende Auftriebskraft bereitzustellen, weist das Auftriebselement in einer besonders bevorzugten Ausführungsform ein Volumen zwischen 5 I und 8 I auf.

Der Schaumstoff hat vorzugsweise eine Zelldichte, die zwischen 30 cm⁻¹ und 40 cm⁻¹ beträgt.

Bevorzugt ist das Rückenteil des Sitzes als Schwimmhilfe ausgebildet. Die Größe des Rückenteils erlaubt dabei eine einfache Unterbringung eines adäquaten Auftriebselements. Alternativ oder zusätzlich kann das Sitzteil als Schwimmhilfe ausgebildet sein.

Das als Schwimmhilfe ausgebildete Teil weist vorzugsweise ein Mittel zu seiner Befestigung an einem menschlichen Körper auf, zum Beispiel in Form von einer oder mehreren Schlaufen. Dies hat den Vorteil, dass ein die Schwimmhilfe verwendender Passagier diese einfacher bei sich behalten kann und das Risiko eines Verlustes, beispielsweise beim Sprung aus einer hochgelegenen Ausgangsluke, verringert ist.

Erfindungsgemäß umfasst das Sitzteil und/oder das Rückenteil einen Kernbereich und einen Hüllenbereich. Der Hüllenbereich umschließt dabei den Kernbereich wenigstens teilweise, wobei das Auftriebselement den Kernbereich bildet.

In einer weiter bevorzugten Ausgestaltung ist nicht nur der Kernbereich sondern auch der Hüllenbereich flammhemmend ausgebildet. Dies verhindert, dass der Sitz im Falle eines Brandes an Bord eines Flugzeugs die Ausbreitung der Flammen fördert. Ein Verfahren zur Herstellung eines solchen flammwidrigen Weichschaumstoffs wird zum Beispiel in der DE 40 10 752 A1 beschrieben.

Bevorzugt weisen der Kernbereich und/oder der Hüllenbereich Graphitschaumkomponenten auf, mittels derer eine flammhemmende Wirkung erzielt wird.

Nachfolgend wird die Erfindung anhand eines Ausführungsbeispiels beschrieben, das in den beigefügten Zeichnungen schematisch dargestellt ist. Dabei zeigen:
- Fig. 1: eine Explosionsdarstellung des erfindungsgemäßen Sitzes und
- Fig. 2: einen Querschnitt durch das Sitzteil des Sitzes aus Fig. 1.

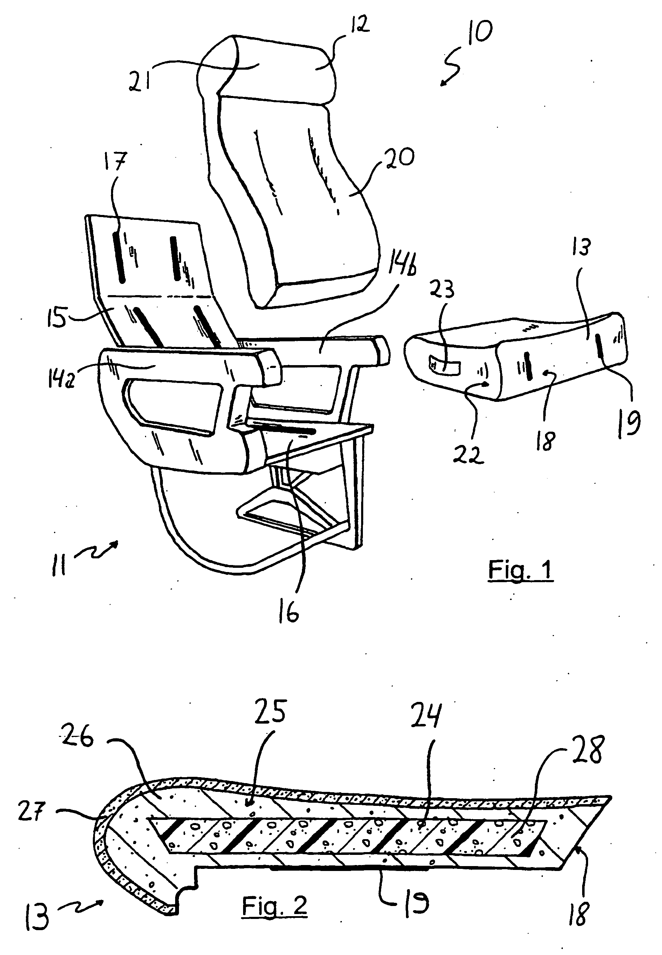

Der in Fig. 1 dargestellte Sitz 10 ist als Fluggastsitz für ein Luftfahrzeug ausgebildet. Der Sitz 10 besteht aus einem Gestell 11, einem Rückenteil 12 und einem Sitzteil 13. Das Gestell 11 weist Armlehnen 14a, 14b auf, zwischen denen Aufnahmeflächen 15, 16 für das Rückenteil 12 und das Sitzteil 13 angeordnet sind.

An den Aufnahmeflächen 15, 16 sind Klettstreifen 17 angebracht, mittels derer das Rückenteil 12 und das Sitzteil 13 an den Aufnahmeflächen 15, 16 befestigbar sind. Dementsprechend sind an den Teilen 12, 13 Klettstreifen 19 vorgesehen, die bei Kontakt mit den aufnahmeseitigen Klettstreifen 17 lösbare Verbindungen eingehen. Ein solcher Klettstreifen 19 ist in Fig. 1 auf der Rückseite 18 des Sitzteils 13 angeordnet.

Das Rückenteil 12 weist einen ergonomisch geformten Rückenabschnitt 20 und eine sich im oberen Bereich des Rückenabschnitts 20 daran anschließende Kopfstütze 21 auf.

Die lösbare Verbindung des Rückenteils 12 und des Sitzteils 13 mit den Aufnahmeflächen 15, 16 ermöglicht es, eventuell abgenutzte oder verunreinigte Rückenteile 12 und Sitzteile 13 auszutauschen, ohne das Gestell 11 aus dem Flugzeug entfernen zu müssen.

Das Sitzteil 13 ist an Seitenflächen 22 und/oder der Unterseite mit Griffschlaufen 23 versehen. Bei einer Notwasserung kann ein Passagier mit Hilfe der Griffschlaufen 23 sicherstellen, dass er, beispielsweise bei einem Sprung aus dem notgewasserten Flugzeug, das Sitzteil 13 nicht verliert.

In Fig. 2 ist der innere Aufbau des Sitzteils 13 zu sehen. Das Sitzteil 13 weist einen Kernbereich 24 und einen Hüllenbereich 25 auf.

Der Hüllenbereich 25 hat ein Formschaumteil 26, das den Kernbereich 24 vollständig umschließt. Je nach Anwendungsfall kann der Kernbereich 24 auch nur teilweise von dem Hüllenbereich 25 umschlossen sein und bildet dann einen Teil der Außenfläche des Sitzteils 13. Die Form des Formschaumteils 26 erlaubt dabei ein bequemes Sitzen. Weiter weist der Hüllenbereich 25 einen Bezug 27 auf, der der optischen Gestaltung des Sitzes 10 dient. Der Bezug 27 kann darüber hinaus schmutzabweisend ausgebildet sein, um die Instandhaltung und Reinigung des Sitzes 10 zu vereinfachen.

An der Unterseite des Sitzteils 13 ist ein Klettstreifen 19 zur Befestigung an der Aufnahmefläche 16 angeordnet.

Der Kernbereich 24 ist aus einem geschlossenzelligen Polyesterpolyurethanweichschaumstoff gebildet. Die Stauchhärte des Kernbereichs 24, die nach DIN EN ISO 3386/1 zu bestimmen ist, liegt dabei etwa bei 9,4 kPa. Der für den Kernbereich 24 verwendete Schaumstoff hat ein Raumgewicht von ca. 32 kg/m³.

Zur Sicherstellung des notwendigen Auftriebs hat der Kernbereich 24 ein Volumen von ca. 6,75 I.

Der Kernbereich 24 des Sitzteils 13 weist eine Zugfestigkeit, ermittelt nach DIN EN ISO 1789, von ca. 185 kPa auf. Dies ist notwendig, da beim Entfernen des Sitzteils 13 hohe Zugkräfte auftreten können. Im Notfall muss das Sitzteil 13, und hier insbesondere das Auftriebselement 28, eine Kraftwirkung ohne Zerstörung ertragen, die von möglicherweise in Panik geratenden Fluggästen auf dieses ausgeübt wird.

Weiter verformt sich der Kernbereich 24 bei Verformung bis zum Bruch auf bis zu 135 % seiner ursprünglichen Länge. Damit ist gewährleistet, dass der Kernbereich 24 sich nicht aufgrund von schlechter Verformbarkeit von dem Hüllenbereich 25 löst.

Der Kernbereich 24 und der Hüllenbereich 25 weisen jeweils Graphitschaumkomponenten auf, mittels derer eine flammhemmende Wirkung erzielt wird.

Bei einem Notfall, bei dem ein Flugzeug eine Notlandung auf Wasser durchführt, entfernt ein Passagier das Sitzteil 13 durch Lösen der Klettstreifen 17, 19 voneinander von der Aufnahmefläche 16. Anschließend führt er ein Körperteil, beispielsweise eine Hand, durch die Griffschlaufe 23, um das Sitzteil 13 nicht zu verlieren. Derart ausgerüstet kann der Passagier sich in das Wasser begeben. Dort gibt ihm das durch den Kernbereich 24 gebildete Auftriebselement 28 Auftrieb, so dass er sich mit nur geringem Aufwand über Wasser halten kann.

Im Gebrauch wird der Sitz 10 in der Regel abgenutzt. Von dieser Abnutzung sind insbesondere das Rückenteil 12 und noch mehr das Sitzteil 13 betroffen. Durch die Gewichtskraft der in dem Sitz 10 sitzenden Person wird der Schaumstoff von Kernbereich 24 und Hüllenbereich 25 zusammengedrückt und verliert mit der Zeit an Stauchhärte. Der Hüllenbereich 25 wird zusätzlich durch Reibung an dem Bezug 27 abgenutzt. Der Sitz 10 gemäß der vorliegenden Erfindung bietet dabei den Vorteil, dass die Instandhaltungszeiten für die Sitzabnutzung kurz gehalten werden können, da das Rückenteil 12 und/oder das Sitzteil 13 bei Abnutzung einfach ausgewechselt werden können.

Weiter kann durch den Verzicht auf Schwimmwesten Gewicht eingespart und damit die Effizienz des Flugzeugs erhöht werden.

Der erfindungsgemäße Sitz 10 kann außer in Luftfahrzeugen auch in anderen Fahrzeugen, beispielsweise Wasserfahrzeugen, eingesetzt werden.

Der erfindungsgemäße Sitz 10 bietet also einen hohen Sitzkomfort und Sicherheit für den Benutzer bei gleichzeitiger Gewichtsersparnis gegenüber herkömmlichen Sitzen. Gleichzeitig ist der Sitz 10 einfach herzustellen.

### Bezugszeichenliste

- 10: Sitz
- 11: Gestell
- 12: Rückenteil
- 13: Sitzteil
- 14a/b: Armlehne
- 15: Aufnahmefläche
- 16: Aufnahmefläche
- 17: Klettstreifen
- 18: Rückseite
- 19: Klettstreifen
- 20: Rückenabschnitt
- 21: Kopfstütze
- 22: Seitenfläche
- 23: Griffschlaufe
- 24: Kernbereich
- 25: Hüllenbereich
- 26: Formschaumteil
- 27: Bezug
- 28: Auftriebselement

## Patentansprüche

1. Sitz , insbesondere Fluggastsitz, mit
einem Rückenteil (12) und
einem Sitzteil (13);
wobei wenigstens eines der Teile von dem Sitz (10) abtrennbar und mit einem Auftriebselement (28) versehen ist;
wobei das Auftriebselement (28) aus einem geschlossenzelligen Polyurethanweichschaumstoff besteht;
wobei das Sitzteil (13) und/oder das Rückenteil (12) einen flammhemmend ausgebildeten Kernbereich (24) und einen Hüllenbereich (25), der den Kernbereich (24) zumindest teilweise umschließt, umfasst und
wobei der Kernbereich (24) durch das Auftriebselement (28) gebildet ist.

2. Sitz nach Anspruch 1, **dadurch gekennzeichnet, dass** der Schaumstoff ein Polyesterpolyurethanweichschaumstoff ist.

3. Sitz nach Anspruch 1 oder 2, **dadurch gekennzeichnet, dass** der Schaumstoff eine Stauchhärte, ermittelt nach DIN EN ISO 3386/1, zwischen 2 kPa und 12 kPa aufweist.

4. Sitz nach Anspruch 3, **dadurch gekennzeichnet, dass** der Schaumstoff eine Stauchhärte, ermittelt nach DIN EN ISO 3386/1, zwischen 8 kPa und 10 kPa aufweist.

5. Sitz nach einem der Ansprüche 1 bis 4, **dadurch gekennzeichnet, dass** der Schaumstoff ein Raumgewicht zwischen 20 kg/m³ und 60 kg/m³ aufweist.

6. Sitz nach Anspruch 5, **dadurch gekennzeichnet, dass** der Schaumstoff ein Raumgewicht zwischen 27 kg/m³ und 38 kg/m³ aufweist.

7. Sitz nach einem der Ansprüche 1 bis 6, **dadurch gekennzeichnet, dass** der Schaumstoff eine Zugfestigkeit, ermittelt nach DIN EN ISO 1798, zwischen 140 kPa und 240 kPa aufweist.

8. Sitz nach Anspruch 7, **dadurch gekennzeichnet, dass** der Schaumstoff eine Zugfestigkeit, ermittelt nach DIN EN ISO 1798, zwischen 180 kPa und 200 kPa aufweist.

9. Sitz nach einem der Ansprüche 1 bis 8, **dadurch gekennzeichnet, dass** der Schaumstoff eine Bruchverformung, ermittelt nach DIN EN ISO 1798, zwischen 100 % und 300 % aufweist.

10. Sitz nach Anspruch 9, **dadurch gekennzeichnet, dass** der Schaumstoff eine Bruchverformung, ermittelt nach DIN EN ISO 1798, zwischen 120 % und 145 % aufweist.

11. Sitz nach einem der Ansprüche 1 bis 10, **dadurch gekennzeichnet, dass** das Auftriebselement (28) ein Volumen zwischen 5 I und 10 I aufweist.

12. Sitz nach einem der Ansprüche 1 bis 11, **dadurch gekennzeichnet, dass** die Zelldichte des Schaumstoffs zwischen 30 cm⁻¹ und 40 cm⁻¹ beträgt

13. Sitz nach einem der Ansprüche 1 bis 12, **dadurch gekennzeichnet, dass** das Rückenteil (12) als Schwimmhilfe ausgebildet ist.

14. Sitz nach einem der Ansprüche 1 bis 13, **dadurch gekennzeichnet, dass** das Sitzteil (13) als Schwimmhilfe ausgebildet ist.

15. Sitz nach einem der Ansprüche 1 bis 14, **dadurch gekennzeichnet, dass** das als Schwimmhilfe ausgebildete Teil (12, 13) ein Befestigungsmittel zur Befestigung der Schwimmhilfe an einem menschlichen Körper aufweist.

16. Sitz nach Anspruch 16, **dadurch gekennzeichnet, dass** der Hüllenbereich (25) flammhemmend ausgebildet ist.

17. Sitz nach Anspruch 17, **dadurch gekennzeichnet, dass** der Kernbereich (24) und/oder der Hüllenbereich (25) Graphitschaumkomponenten aufweist.

## Claims

1. Seat, especially for an air passenger seat, with
a back part (12) and
a seat part (13):
wherein at least one of the parts of the seat (10) is detachable and is provided with a buoyancy element (28);
wherein the buoyancy element (28) is made of a closed-cell polyurethane soft foam;
wherein the seat part (13) and/or the back part (12) comprises a flame-resistant core (24) and a shell portion (25) which at least partly surrounds the core (24) and
wherein the core (24) is formed of a buoyancy element (28).

2. Seat according to claim 1 **characterised in that** the foam material is a polyester-polyurethane soft foam material.

3. Seat according to claim 1 or 2 **characterised in that** the foam material has a compression hardness, ascertained in accordance with DIN EN ISO 3386/1, of between 2kPa and 12kPa.

4. Seat according to claim 3 **characterised in that** the foam material has a compression hardness, ascertained in accordance with DIN EN ISO 3386/1, of between 8kPa and 10kPa.

5. Seat according to one of the claims 1 to 4 **characterised in that** the foam material has a bulk density of between 20 kg/m³ and 60 kg/m³.

6. Seat according to claim 5 **characterised in that** the foam material has a bulk density of between 27 kg/m³ and 38 kg/m³.

7. Seat according to one of the claims 1 to 6 **characterised in that** the foam material has a tensile strength, ascertained in accordance with DIN EN ISO 1798, of between 140 kPa and 240 kPa.

8. Seat according to Claim 7 **characterised in that** the foam material has a tensile strength, ascertained in accordance with DIN EN ISO 1798, of between 180 kPa and 200 kPa.

9. Seat according to one of the claims 1 to 8 **characterised in that** the foam material has a fracture deformation, ascertained in accordance with DIN EN ISO 1798, of between 100% and 300%.

10. Seat according to claim 9 **characterised in that** the foam material has a fracture deformation, ascertained in accordance with DIN EN ISO 1798, of between 120% and 145%.

11. Seat according to one of the claims 1 to 10 **characterised in that** the buoyancy element (28) has a volume of between 5 I and 10 I.

12. Seat according to one of the claims 1 to 11 **characterised in that** the cell density of the foam material is between 30 cm⁻¹ and 40 cm⁻¹.

13. Seat according to one of the claims 1 to 12 **characterised in that** the back part (12) is designed as a buoyancy aid.

14. Seat according to one of the claims 1 to 13 **characterised in that** the seat part (13) is designed as a buoyancy aid.

15. Seat according to one of the claims 1 to 14 **characterised in that** the part (12, 13) designed as a buoyancy aid has a fastening means for fastening the buoyancy aid to a human body.

16. Seat according to Claim 15 **characterised in that** the shell area (25) is designed to be flame-resistant.

17. Seat according to Claim 16 **characterised in that** the core (24) and/or the shell area (25) has graphite foam components.

## Revendications

1. Siège, en particulier siège d'avion, comprenant
une partie formant un dossier (12) et
une partie formant une assise (13) ;
où l'une au moins des parties est séparable du siège (10) et est pourvue d'un élément de portance (28) ;
l'élément de portance (28) est constitué en mousse souple de polyuréthane à cellules fermées ;
la partie formant l'assise (13) et/ou la partie formant le dossier (12) comprend une zone centrale (24) réalisée de façon ignifugée et une zone enveloppe (25) qui entoure au moins partiellement la zone centrale (24), et
la zone centrale (24) est formée par l'élément de portance (28).

2. Siège selon la revendication 1, **caractérisé en ce que** la mousse est une mousse souple polyester-polyuréthane.

3. Siège selon la revendication 1 ou 2, **caractérisé en ce que** la mousse présente une dureté à l'écrasement, déterminée d'après la norme DIN EN ISO 3386/1, entre 2 kPa et 12 kPa.

4. Siège selon la revendication 3, **caractérisé en ce que** la mousse présente une dureté à l'écrasement, déterminée d'après la norme DIN EN ISO 3386/1, entre 8 kPa et 10 kPa.

5. Siège selon l'une des revendications 1 à 4, **caractérisé en ce que** la mousse présente un poids volumique entre 20 kg/m³ et 60 kg/m³.

6. Siège selon la revendication 5, **caractérisé en ce que** la mousse présente un poids volumique entre 27 kg/m³ et 38 kg/m³.

7. Siège selon l'une des revendications 1 à 6, **caractérisé en ce que** la mousse présente une résistance à la traction, déterminée d'après la norme DIN EN ISO 1798, entre 140 kPa et 240 kPa.

8. Siège selon la revendication 7, **caractérisé en ce que** la mousse présente une résistance à la traction, déterminée d'après la norme DIN EN ISO 1798, entre 180 kPa et 200 kPa.

9. Siège selon l'une des revendications 1 à 8, **caractérisé en ce que** la mousse présente une déformation à la rupture, déterminée d'après la norme DIN EN ISO 1798, entre 100 % et 300 %.

10. Siège selon la revendication 9, **caractérisé en ce que** la mousse présente une déformation à la rupture, déterminée d'après la norme DIN EN ISO 1798, entre 120 % et 145 %.

11. Siège selon l'une des revendications 1 à 10, **caractérisé en ce que** l'élément de portance (28) présente un volume entre 5 I et 10 I.

12. Siège selon l'une des revendications 1 à 11, **caractérisé en ce que** la densité des cellules de la mousse est comprise entre 30 cm⁻¹ et 40 cm⁻¹.

13. Siège selon l'une des revendications 1 à 12, **caractérisé en ce que** la partie formant le dossier (12) est réalisée comme un dispositif d'aide à la natation.

14. Siège selon l'une des revendications 1 à 13, **caractérisé en ce que** la partie formant l'assise (13) est réalisée comme un dispositif d'aide à la natation.

15. Siège selon l'une des revendications 1 à 14, **caractérisé en ce que** la partie (12, 13) réalisée comme un dispositif d'aide à la natation comprend un moyen de fixation pour la fixation du dispositif d'aide à la natation sur un corps humain.

16. Siège selon la revendication 16, **caractérisé en ce que** la zone enveloppe (25) est réalisée de façon ignifugée.

17. Siège selon la revendication 17, **caractérisé en ce que** la zone centrale (24) et/ou la zone enveloppe (25) comprend des composants de mousse de graphite.
